(19) **Europäisches Patentamt / European Patent Office / Office européen des brevets**

(11) **EP 3 625 273 B1**

(12) **EUROPEAN PATENT SPECIFICATION**

(45) Date of publication and mention
of the grant of the patent:
**05.05.2021   Bulletin 2021/18**

(51) Int Cl.:
***C08F 210/06*** (2006.01)   ***C08L 23/14*** (2006.01)

(21) Application number: **18713957.1**

(86) International application number:
**PCT/EP2018/058209**

(22) Date of filing: **29.03.2018**

(87) International publication number:
**WO 2018/210476 (22.11.2018 Gazette 2018/47)**

(54) **HETEROPHASIC POLYOLEFIN COMPOSITION WITH EXCELLENT OPTICAL PROPERTIES**

HETEROPHASISCHE POLYOLEFINZUSAMMENSETZUNG MIT HERVORRAGENDEN OPTISCHEN EIGENSCHAFTEN

COMPOSITION DE POLYOLÉFINE HÉTÉROPHASIQUE PRÉSENTANT D'EXCELLENTES PROPRIÉTÉS OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2017   EP 17171746**

(43) Date of publication of application:
**25.03.2020   Bulletin 2020/13**

(73) Proprietor: **Borealis AG**
**1220 Vienna (AT)**

(72) Inventors:
• **WANG, Jingbo**
**4021 Linz (AT)**
• **DOSHEV, Petar Emilov**
**4021 Linz (AT)**

• **GAHLEITNER, Markus**
**4021 Linz (AT)**
• **TRANNINGER, Cornelia Anita**
**4021 Linz (AT)**
• **POTTER, Elisabeth**
**4021 Linz (AT)**
• **LILJA, Johanna**
**06101 Porvoo (FI)**

(74) Representative: **Kador & Partner PartG mbB**
**Corneliusstraße 15**
**80469 München (DE)**

(56) References cited:
**EP-A1- 1 354 901**   **EP-A1- 2 020 291**
**WO-A1-2016/198601**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is concerned with heterophasic compositions having low haze as well as good stiffness / impact balance. The present invention is particularly concerned with a new class of random heterophasic copolymers. The present invention also concerns a process for the production of the inventive heterophasic polyolefin compositions and further use thereof.

**Background**

Polypropylene is widely used in moulding applications, including caps & closure, thin wall packaging, houseware and similar applications. In these applications a combination of high stiffness and good impact strength is required. Moreover, often also a low haze is targeted. Heterophasic polypropylene copolymers lead to a very good stiffness /impact balance but normally the haze of such materials is poor due to the dispersed rubber phase having a different refractive index which leads to light scattering and thus non transparent materials. A possible way to overcome this problem is using a combination of a random heterophasic copolymer (RAHECO) and plastomer plus LDPE, having a specific density. This leads to the formation of a dispersed phase consisting of the LDPE-material and the internal rubber matching the density of the matrix phase. In such a situation, the random matrix provides the mechanical strength, and the plastomer plus LDPE minimize the light scattering. However, in such materials containing LDPE or other compatibilizers, stiffness and transparency are sacrificed to some extent.

For example EP1659151 discloses polypropylene composition for moulding, which has relatively low haze. This composition comprises: A) 50 - 70 wt% of a propylene polymer comprising a propylene homopolymer and/or a propylene copolymer with up to 5 wt% ethylene and/or one or more C 4-C 8alpha olefins and having an intrinsic viscosity IV A1.00 - 2.20 dl/g; B) 5 - 20 wt% of a first elastomeric ethylene-propylene copolymer having an intrinsic viscosity IV(B) 1.65 - 2.50 dl/g and an ethylene content of 20 - 40 wt%; C) 5 - 25 wt% of a second elastomeric ethylene-propylene copolymer having an intrinsic viscosity IV(C) of 0.90 -1.60 dl/g and an ethylene content of 45 - 85 wt%, and D) 5 - 30 wt% of an ethylene polymer having an ethylene content of at least 80 mol% and having a melt index MI (190 °C, 2.16 kg) of at least 5 g/10 min and a density of 905 - 925 kg/m$^3$. Component D) limits the total performance and insofar is undesirable.

Similarly EP2424729 relates to a composition comprising (A) an LDPE in an amount of 15 to 50 wt.-% and (B) a polymer blend in an amount of 50 to 85 wt.-%, wherein polymer blend (B) consists of 20 - 80 wt.-% propylene random copolymer having a C 2 content of equal or below 4 wt.-% and 80 - 20 wt.-% of a polyolefin comprising at least one C 4-10 alpha olefin, a film, a coextruded film and an article made thereof. Again LDPE is used as a modifier.

WO 2013144061 A1 is concerned with a film comprising at least one layer of a polymer composition comprising a styrenic based elastomer and a propylene copolymer. In this case SEBS is used as a modifier which not only renders the compositions rather soft but also increases the overall cost.

Similarly EP1820821 covers heterophasic polyolefin compositions comprising two compatiblizers C1 and D1 with C1 being a styrene-based elastormer and D1 being a ethylene alpha olefin copolymer.

Thus, hetereophasic polypropylene compositions having good haze as well as good stiffness/impact balance without incorporation of a compatiblizer are still a relevant development target.

**Summary of the invention**

The present invention is based on the surprising finding that propylene butylenes random polypropylenes have a very good compatibility with different type of rubbers particularly ethylene / C3-C12 alpha olefin plastomers having a density of less than 904 kg/m$^3$, whereby compatibilizers become dispensable enabling optimizations in terms of haze, stiffness and/or impact.

The present invention insofar provides

a heterophasic polyolefin composition having an MFR of 7 to 100 g/10min and having a Tm(1) of 150 °C or higher comprising a propylene butylene copolymer matrix phase and

a rubber phase selected from ethylene / C3-C12 alpha olefin plastomers

the composition being obtainable by blending

60.0 to 99.0 wt.-% of a propylene butylene copolymer which

comprises monomer units derived from

     a) propylene in an amount of 88-98 wt.-%
     b) butylenes in an amount of 2-12 wt.-%

with respect to the total weight of the propylene butylene copolymer

B) 1.0 -40.0 wt.-% of ethylene / C3-C12 alpha olefin plastomer(s) having a density of less than 904 kg/m$^3$ and optionally a nucleating agent in an amount of less than 0.25 wt.-% with respect to the total of the heterophasic composition.

The present invention further provides a process for the preparation of the heterophasic polyolefin composition according to the present invention comprising the steps of

- polymerizing a propylene butylene copolymer including monomer units derived from

a) propylene in an amount of 88-98 wt.-%
b) butylene in an amount of 2-12 wt.-%

with respect to the total weight of the propylene butylene copolymer;
in at least two reactors coupled in series
using a Ziegler Natta catalyst system
having citraconate as internal donor and an organosilane, preferably dicyclopentyldimethoxysilane (donor D) as external donor at a Al/external donor ratio of 5.0 - 8.0 mol/mol and a Al/Ti ratio of 190 to 240 mol/mol,
whereby in a first reactor a pre-polymerization is carried out at 25-35°C for 10 to 60 minutes yielding a pre-polymer, further polymerizing the pre-polymer at a temperature of 65 - 75°C, at a C4/C3 ratio of 115 to 145 mol/kmol yielding a first intermediate having an C4 content of 4 to 7 wt.-%,
transferring the first intermediate to a second reactor and further polymerizing at 75 to 85°C at a C4/C3 ratio of 90 to 150 mol/kmol,
to yield the second reactor product,
- extruding 60.0 to 99.0 wt.-% of the second reactor product together with
1.0 -40.0 wt.-% of ethylene / C3-C12 alpha olefin plastomers having a density of less than 904 kg/m$^3$,
in the presence of a nucleating agent in an amount of less than 0.2 wt.-% with respect to the total heterophasic polyolefin composition
to yield the final heterophasic polyolefin composition.

In a further aspect the present invention is concerned with an article comprising the inventive composition(s) and also the use of inventive composition(s) for injection molding and packing applications particularly thin wall packaging.

**Definitions**

A heterophasic polyolefin composition means that two distinct phases are present, i.e. a matrix phase and a rubber phase. Presence of a second phase easily is detectable via DSC analysis: the crystalline propylene butylene copolymer matrix will show a melting point of 150 °C or higher, whereas the rubber component forming a separate phase will be detected by a glass transition temperature at far lower temperatures. It is also possible that the propylene butylene copolymer matrix shows two melting points. However, it is required at least one melting point has to be 150°C or higher.

The matrix phase "propylene butylene copolymer matrix" is characterized by relatively high crystallinity. As well known in the art this phase is for the most part insoluble in cold xylene, which has to be understood such that cold xylene solubles in an amount of up to 4.5 wt.-% are tolerable. The rubber phase will be essentially amorphous, i.e. almost completely soluble in cold xylene.

The inventive composition is obtainable by blending components A) and B), i.e. the propylene butylene copolymer and the ethylene C3-C12 alpha olefin plastomer. A skilled person will understand that it is not possible to retrace the process history by conventional routine analytical methods.

A propylene butylene polymer according to the present invention is derived from propylene and butylenes monomer units and may comprise traces of other monomer units, particularly ethylene monomer units. Traces means less than 0.5 wt.-% with respect to the total propylene butylene copolymer.

An ethylene / C3-C12 alpha olefin plastomer having a density of less than 904 kg/m$^3$ is composed of monomer units derived from ethylene and alpha olefins having from 3 to 12 carbon atoms, whereby the density is less than 904 kg/m$^3$. The term plastomer indicates rubber-like properties and the processability of plastic.

"Free of phthalic acid esters as well as decomposition products thereof" indicates absence of such components within the well accepted understanding in the art. "Free of phthalic acid esters as well as decomposition products thereof" indicates a maximum of 10 μg/kg, i.e. 10 ppb by weight. Such values have been reported for common soil and river sediments. It is well known for many years that the actual detection limit is lower than the environmental background concentration. Attention is drawn to H. Fromme, T. Küchler, T. Otto, K. Pilz, J. Muller, A. Wenzel Water Research 36 (2002) 1429 - 1438 which is incorporated by reference herewith. Detection is straightforward by gas chromatography coupled with one- or two-dimensional mass spectrometry (GC-MS respectively GC-MS/MS) optionally preceded by enrichment on a suitable adsorption material.

A Ziegler Natta catalyst system includes the solid Ziegler Natta catalyst component (SC), the external donor and the co-catalyst. Ziegler Natta catalyst system and Ziegler Natta polymerization catalyst are used interchangeable.

**Detailed description**

The heterophasic polyolefin composition according to the present invention is characterized by a Tm of 150°C or higher. Such Tm understandably originates from component A) being the propylene butylene copolymer. Depending on the catalyst system applied for polymerization of the propylene butylene copolymer, a Tm of at least 150 °C may require the use of a nucleating agent. It is however desirable that the amount of nucleating agent is limited to a maximum of 0.25 wt.-% with respect to the total of the heterophasic composition.

The nucleating agent preferably is a trisamide or sorbitol derivative nucleating agent. Particularly preferred are 1,3:24- Bis (3,4-dimethylobenzylideno) sorbitol (DMDBS) or 1,3,5-benzene-trisamide. DMDBS is for example commercially available as Millad 3988. The amount of the nucleating agent is preferably from 0.10 to 0.23 wt.-% and more preferably 0.15 to 0.22 wt.-%. The nucleating agent can be introduced as a masterbatch. If a further propylene homopolymer C) is present it is possible to use such propylene homopolymer C) as a carrier polymer for introducing the nucleating agent during co-extrusion.

In addition to a standard nucleating agent, it is also possible that the propylene butylenes copolymer contains a particulate nucleating agent such as a vinylcycloalkane, like vinylcyclohexane (VCH), polymer and/or vinylalkane polymer. Polyvinylcyclohexane (PVCH) is particularly preferred. It is also possible to introduce the particulate nucleating agent by BNT- technology as described below: the particulate nucleating agent may be introduced to the inventive composition during the polymerization process of the polypropylene butylenes copolymer. If present the particulate nucleating agent is preferably present in an amount of 10 to 100 ppm with respect to the total composition.

It is particularly preferred for the inventive compositions that the comprised propylene butylenes copolymers do not contain phthalic acid esters as well as decomposition products thereof. As defined above "Free of phthalic acid esters as well as decomposition products thereof" indicates a maximum of 10 $\mu$g/kg, i.e. 10 ppb by weight. This is guaranteed by the use of a Ziegler Natta catalyst not having a phthalate internal donor for the preparation. In other words, the catalyst used in the present invention is a Ziegler-Natta catalyst comprising a specific solid catalyst component (SC) free of phthalic acid esters or derivates thereof. Said solid catalyst component and preparation thereof is described below in the process section. Said solid catalyst component (SC) is free of any external support material and comprises (a) a compound of a transition metal selected from one of the groups 4 to 6, in particular of group 4 of the periodic table (IUPAC), preferably Ti, (b) a compound of a metal selected from one of the groups 1 to 3 of the periodic table (IUPAC), preferably of group 2 of the periodic table (IUPAC), in particular Mg, (c) a non-phthalic internal electron donor (ID).

The solid catalyst component can optionally contain an aluminium compound (d). The solid catalyst component does not contain any phthalic compounds.

It is further particularly preferred that the heterophasic polyolefin composition according to the present invention is free of phthalic acid esters as well as decomposition products thereof, i.e. the composition as a whole meets the maximum of 10 $\mu$g/kg, i.e. 10 ppb by weight. In other words any further component including for example the ethylene C3-C12 alpha olefin plastomer also has to meet the criteria as set forth above.

The propylene polymer composition according to the present invention has a melt flow rate MFR2 (2.16 kg load, 230 °C) measured according to ISO 1133, in the range of 7 to 100 g/10min, preferably in the range of 10 to 80 g/10 min, more preferably in the range of 12 to 60 g/10 min.

The melting temperature (Tm) measured according to ISO 11357-3 of the heterophasic polyolefin composition according to the present invention is at least 150°C, preferably at least 151 °C and more preferably at least 152°C. The melting temperature (Tm) measured according to ISO 11357-3 of the heterophasic polyolefin composition according to the present invention preferably will not exceed 160 °C and more preferably will not be higher than 158 °C. It is self explaining that the melting temperature can be measured on the heterophasic polyolefin composition, i.e. including the rubber phase or it can be measured on the propylene butylene copolymer, i.e. component A, alone. In other words all melting temperatures (and ranges) as given above with respect to the heterophasic polyolefin composition also hold for the propylene butylene copolymer.

Component A), i.e. the propylene butylene copolymer preferably has a crystallisation temperature Tc of more than 118°C, more preferably from 119 to 130°C and most preferably from 120°C to 128°C. As described above, usually a measurement on the heterophasic polyolefin composition is possible.

The heterophasic polyolefin composition according to the present invention preferably has a tensile modulus (measured on injection molded test specimens in accordance with ISO 527) of less than 1600 MPa, preferably in the range of 500 to 1500 MPa and most preferably 550 to 1450 MPa.

The heterophasic polyolefin composition according to the present invention preferably has a Charpy notched impact strength (measured on injection molded test specimens in accordance with ISO 179 1eA at 23°C, short NIS (23°C)) of above 4.5 kJ/m$^2$, more preferably above 4.7 kJ/m$^2$ and most preferably above 5.0 kJ/m$^2$. Usually the NIS (23°C) will not be higher than 15.0 kJ/m$^2$, frequently not be higher than 12.0 kJ/m$^2$.

Haze (when measured on injection molded 1mm plaques in accordance with ASTM D1003) of the inventive heterophasic polyolefin composition is preferably below 40 %, more preferably below 36% and most preferable below 35%. Usually haze of the inventive heterophasic polyolefin composition when measured in the described way will be above 15%, frequently above 20%.

The amount of the propylene butylene copolymer (component A) with respect to the heterophasic polyolefin composition according to the present invention is 60.0 to 99.0 wt.-%, preferably 70 to 98 wt.-%, more preferably 80 to 97 wt.-%.

The amount of monomer units derived from butylene in the propylene butylene copolymer (component A)) is 2.0 to 12.0 wt.-%, preferably 4.0 to 10.0 wt.-% and more preferably 5.0 to 8.0 wt.-%.

The melt flow rate (MFR 230°C; 2.16 kg, ISO 1133) of propylene butylene copolymer (component A) is preferably 12 to 50 g/10min, more preferably 15 to 35 g/10min and most preferably 16 to 25 g/10min.

The amount of the ethylene / C3-C12 alpha olefin plastomer is 1 to 40 wt.-%, preferably 2 to 30 wt.-% and more preferably 3 to 20 wt.-%. As can be seen from the percentages of components A and B the total amount of A+B has to amount to 100 wt.-%. In case a further component such as homopolymer C is present, the amount thereof shall refer to the total weight of the composition, such as A+B+C.

The ethylene / C3-C12 alpha olefin plastomer preferably is selected from the group of a C2C3, C2C6, C2C8 alpha olefin plastomers and mixtures thereof. Particularly preferred are C2C3 and C2C8 plastomers, i.e. homogeneous copolymers of ethylene.

The density of the ethylene / C3-C12 alpha olefin plastomer is in any case less than 904 kg/m$^3$. Usually the density of the ethylene / C3-C12 alpha olefin plastomer will be from 850 to 900 kg/m$^3$ and preferably from 860 to 900 kg/m$^3$. When the ethylene / C3-C12 alpha olefin plastomer is a C2C3 rubber the density is preferably 885 kg/m$^3$ or less, more preferably in the range of 860 to 885 kg/m$^3$. When the ethylene / C3-C12 alpha olefin plastomer is a C2C8 plastomer is preferably below 890 kg/m$^3$, more preferably in the range of 860 to 890 kg/m$^3$.

The melt flow rate (MFR 230°C; 2.16 kg, ISO 1133) of the ethylene / C3-C12 alpha olefin plastomer (component (B)) is preferably 0.1 to 50 g/10min, more preferably 0.5 to 30 g/10min and most preferably 0.8 to 20 g/10min.

In a first specifically preferred embodiment the ethylene / C3-C12 alpha olefin plastomer is a C3C2 rubber having an ethylene content of 17 wt.-% or lower and a density of 0.88 g/cm$^3$ or less. More preferably the C3C2 rubber has an ethylene content of 13 wt% to 17 wt.-% and a density of 0.860 g/cm$^3$ to 0.870 g/cm$^3$. In addition to that but independently there from the C3C2 rubber preferably has an elongation at break of 2000% or more.

The heterophasic polyolefin composition according to the first specifically preferred embodiment preferably has a tensile modulus of at least 900 MPa, preferably at least 950 MPa. It goes without saying the tensile modulus will depend on the amount of the C3C2 rubber, whereby lower amounts of C3C2 rubber will yield higher tensile modulus. Usually the tensile modulus will not be higher than 1450 MPa.

The heterophasic polyolefin composition according to the first specifically preferred embodiment preferably has a NIS (23°) of at least 4.5 kJ/m$^2$, more preferably at least 10 kJ/m$^2$. It goes without saying the NIS will depend on the amount of the C3C2 rubber, whereby higher amounts of C3C2 rubber will yield higher NIS. Usually the NIS will not be higher than 12 kJ/m$^2$.

As the tensile modulus and the NIS constitute a conflict of aims it is particularly preferred the heterophasic polyolefin composition according to the first specifically preferred embodiment has a product of tensile modulus [MPa] x NIS (23°) [kJ/m$^2$] of at least 6000 MPa * kJ/m$^2$.

The heterophasic polyolefin composition according to the first specifically preferred embodiment preferably has a haze (1mm plaque) of below 35%, preferably below 33%. Usually the haze will be higher than 15%.

In a second specifically preferred embodiment the ethylene / C3-C12 alpha olefin plastomer is a C2C8 plastomer, whereby the C2C8 plastomer has a density of below 0.904 g/cm$^3$, preferably of below 0.890 g/cm$^3$. Usually the density will be in the range of 0.865 g/cm$^3$ and 0890 g/cm$^3$. In addition to that but independently there from the C2C8 plastomer preferably has an elongation at break of above 930 % (ISO 527-2(5A), molded plaques), more preferably of above 990%.

The heterophasic polyolefin composition according to the second specifically preferred embodiment preferably has a tensile modulus of at least 1200 MPa, more preferably 1250 MPa or more. Usually the tensile modulus will not be higher than 1450 MPa.

The heterophasic polyolefin composition according to the second specifically preferred embodiment preferably has a NIS (23°) of at least 4.5 kJ/m$^2$, more preferably at least 5 kJ/m$^2$. It goes without saying the NIS will depend on the amount of the rubber component, whereby higher amounts of rubber will yield higher NIS. Usually the NIS will not be higher than 12 kJ/m$^2$.

The heterophasic polyolefin composition according to the second specifically preferred embodiment preferably has a haze (1mm plaque) of below 40%, preferably below 38%. Usually the haze will be higher than 20%.

Usually the required Tm of at least 150 °C will result in the need of a nucleating agent. As stated above it is however desirable that the amount of nucleating agent is limited to a maximum of 0.25 wt.-%. It is preferable the nucleating agent is a soluble nucleating agent. More preferably the nucleating agent is a trisamide or sorbitol derivative nucleating agent. Particularly preferred are 1,3:24- Bis (3,4-dimethylobenzylideno) sorbitol (DMDBS) or 1,3,5-benzene-trisamide. DMDBS is for example commercially available as Millad3988. The amount of the nucleating agent is preferably from 0.10 to 0.23 wt.-% and more preferably 0.15 to 0.22 wt.-%. The nucleating agent can be introduced as a masterbatch. If a further propylene homopolymer C) is present it is possible to use such propylene homopolymer C) as a carrier polymer for introducing the nucleating agent during co-extrusion.

The heterophasic polyolefin composition according to the present invention preferably does not contain a compatibilizer selected from the group of ethylene polymers having an ethylene content of at least 80 mol% and a density of 905 to 925 kg/m$^3$, LDPE and/or Styrene Ethylene Butylene Styrene Block Copolymer(s).

In a further aspect the present invention is concerned with a process for the preparation of a heterophasic polyolefin composition according to the present invention. Such process comprises the steps of

- polymerizing a propylene butylene copolymer including monomer units derived from

       a) propylene in an amount of 88-98 wt.-%
       b) butylene in an amount of 2-12 wt.-%

with respect to the total weight of the propylene butylene copolymer;
in at least two reactors coupled in series
using a Ziegler Natta catalyst system having citraconate as internal donor, and an organo aluminium compound as co-catalyst and further an organosilane, preferably dicyclopentyldimethoxysilane (donor D) as external donor at a Al/external donor ratio of 5.0 - 8.0 mol/mol and a Al/Ti ratio of 190 to 240 mol/mol,
whereby in a first reactor a pre-polymerization is carried out at 25-35°C for 10 to 60 minutes yielding a pre-polymer,
further polymerizing the pre-polymer at a temperature of 65 - 75°C, at a C4/C3 ratio of 115 to 145 mol/kmol yielding a first intermediate having an C4 content of 4 to 7 wt.-%,
transferring the first intermediate to a second reactor and further polymerizing at 75 to 85°C at a C4/C3 ratio of 90 to 150 mol/kmol,
to yield the second reactor product,
- extruding 60.0 to 99.0 wt.-% of the second reactor product together with
1.0 -40.0 wt.-% of ethylene / C3-C12 alpha olefin plastomers having a density of less than 904 kg/m$^3$,
in the presence of a nucleating agent in an amount of less than 0.25 wt.-% with respect to the total heterophasic polyolefin composition
to yield the final heterophasic polyolefin composition.

The propylene butylene copolymer (component (A)) according to the present invention is produced in a sequential polymerization process. The term "sequential polymerization process" indicates that the propylene butylene copolymer is produced in at least two reactors connected in series. In one preferred embodiment the term "sequential polymerization process" indicates in the present application that the polymer of the first reactor (R-1), i.e. the propylene homo- or co- fraction (A), is directly conveyed with unreacted monomers to the second reactor (R-2) in which the propylene butylene fraction (B) is produced.

Accordingly, a decisive aspect of the present process is the preparation of the propylene butylene copolymer in at least two separate reactors, wherein the reaction mixture of the first reactor (R-I) is conveyed, preferably directly conveyed, to the second reactor (R-2), and thus the propylene butylene copolymer comprises two fractions, namely fractions (A) and (B). Accordingly, the present process comprises at least a first reactor (R-1) and a second reactor (R-2).

The term "polymerization reactor" indicates a reactor, where the main polymerization takes place. Thus in case the process consists of two or more polymerization reactors, this definition does not exclude the option that the overall process comprises for instance a pre-polymerization step in a pre-polymerization reactor. The term "consists of is only a closing formulation in view of the main polymerization reactors. In case the process configuration comprises a pre-polymerization reactor, fraction (A) means the sum of (co)polymers produced in the pre-polymerization reactor and in the first polymerization reactor (R-1).

The polymerization reactors are selected from slurry and gas phase reactors.

The first reactor (R-1) is preferably a slurry reactor (SR) and can be any continuous or simple stirred batch tank reactor or a loop reactor operating in bulk or slurry. By "bulk polymerization" is meant a process, where the polymerization is conducted in a liquid monomer essentially in the absence of an inert diluent. However, as it is known to a person skilled in the art, the monomers used in commercial production may contain aliphatic hydrocarbons as impurities. For instance, the propylene monomer may contain up to 5 % of propane as an impurity. Thus, preferably polymerization in bulk means polymerization in a reaction medium that comprises of at least 60 % (wt/wt) of the monomer. According to the present invention the slurry reactor (SR) is preferably a (bulk) loop reactor (LR). The second reactor (R-2) is preferably a gas phase reactor (GPR). Such gas phase reactor (GPR) can be any mechanically mixed or fluidized bed reactor or settled bed reactor. Preferably the gas phase reactor (GPR) comprises a mechanically agitated fluidized bed reactor with gas velocities of at least 0.2 m/sec. The gas phase reactor of a fluidized bed type reactor can further include a mechanical agitator to facilitate the mixing within the fluidized bed.

A preferred multistage process is a "loop-gas phase"-process, such as developed by Borealis (known as BORSTAR® technology) described e.g. in patent literature, such as in WO-A- 98/58976, EP-A-887380 and WO-A-98/58977.

Preferably in the first reactor (R-1), preferably in the slurry reactor (SR), like in the loop reactor (LR), the temperature is equal or more than 65°C, preferably in the range of equal or more than 67 °C to equal or below 75 °C, still more preferably in the range of equal or more than 67 °C to equal or below 74 °C.

The pressure in the first reactor (R-1), preferably in the slurry reactor (SR), like in the loop reactor (LR), is not a critical issue, however, is typically within the range of 4000 to 6500 kPa.

Hydrogen can be added into the reactor for controlling the molar mass in a manner known per se.

Subsequently, the reaction mixture from the first reactor (R-1) is transferred to the second reactor (R-2), i.e. to the gas phase reactor (GPR-1), whereby the temperature in the second reactor (R2) is preferably within the range of equal or more than 75 °C to equal or below 85 °C, more preferably of equal or more than 77 °C to equal or below 82 °C.

Further it is preferred that in the second reactor (R-2), preferably in the gas phase reactor (GPR-1), the pressure is within the range of 2000 to 4000 kPa. Hydrogen can be added for controlling the molar mass in a manner known per se.

The residence time can vary in both reactor zones.

In one embodiment of the process for producing propylene polymer compositions of the present invention the residence time in the bulk reactor, e.g. loop reactor, is in the range 0.2 to 2 hours, preferably 0.3 to 1.0 hour and the residence time in gas phase reactor (GPR-1) will generally be 0.75 to 3.0 hours, preferably 1.0 to 2.0 hours more preferably 1.25 to 2.0 hours.

The present process preferably encompasses a pre-polymerization (Pr) prior to the polymerization in the first reactor (R-1). The pre-polymerization (Pr) can be conducted in the first reactor (R-1), however it is often preferred in commercial processes that the pre- polymerization (Pr) takes place in a separate reactor, so called pre-polymerization reactor (Pr-R). A pre-polymerization reactor is of smaller size compared to the first (R-1) and second (R-2) reactor, respectively. The reaction volume of the pre-polymerization reactor (Pr-R) can be e.g. between 5 % and 40 % of the reaction volume of the first reactor (R-1), like the loop reactor. In said pre-polymerization reactor (Pr-R), the pre-polymerization (Pr) is performed in bulk or slurry as defined for the first reactor (R-1) above.

Further it is appreciated that the pre-polymerization temperature is from 25 to 35 °C. Residence times for prepolymerization can vary between 0.1 to 1.0 hours, like between 0.2 and 0.6 hours, typically 15 to 30 minutes.

The amount of polymer material made in the first reactor, preferably the loop reactor, preferably is 45 to 70 wt.-% including also the minor amount of polymer material made in pre.polymerization. More preferably the amount is 55 to 65 wt.-%. If only two reactor are used (pre-polymerization is not considered insofar), the amount preferably will be in the upper end, i.e. preferably will be 55 to 65 wt.-%. As known in the art the amount of material is also referred to as split.

The amount of polymer material made in the second reactor, preferably is 30 to 55 wt.-%, more preferably (pre-polymerization is not considered insofar), the amount preferably will be 35 to 45 wt.-%.

According to the process of the invention butylene comonomer can be fed independently into the polymerization process

i) into the first reactor (R-1) only, whereby any unreacted comonomers can be, preferably are, transferred to the second reactor together with the propylene polymer fraction produced in R-1 (A), or

ii) comonomers are fed into the first reactor (R-1) and in addition to the unreacted comonomers from the first reactor additional comonomer is fed into the second reactor (R-2), or

iii) no comonomers are fed into the first reactor (R-1), but are fed only into the second reactor (R-2).

Variant ii) is particularly preferred.

Feeding butylenes comonomer independently into the polymerization process means that it is possible that both are fed to the same reactor(s) or are fed into different reactors.

It is preferred to purge the polymer after the polymerization to reduce the amount of residual hydrocarbons in the polymer. Typically the purging step is conducted in a purge vessel where the polymer is contacted with a purge gas, conventionally nitrogen. The temperature during the purging step is from 30 to 110 °C, preferably from 30 to 95 °C and more preferably from 40 to 80 °C. The average residence time is from 5 to 240 minutes, preferably from 10 to 200 minutes. Catalyst residues are deactivated with steam or moisturized air.

Preferably the purging step is conducted continuously. In a preferred embodiment the polymer particles are introduced to the top of the purge vessel and removed from the bottom. Thereby a downward flow of polymer particles is established. The purge gas is typically introduced at the bottom of the purge vessel so as to achieve a counter-current flow of particles and gas. The gas flow is selected so that no fluidization of the polymer particles occurs in the purge vessel. Thereby a narrow residence time distribution of the polymer particles is obtained and the process has a good efficiency.

The catalyst used in the present invention is a Ziegler-Natta catalyst comprising a specific solid catalyst component (SC) free of phthalic acid esters or derivates thereof as briefly outlined below. The solid catalyst component and preparation thereof is also described below.

Said solid catalyst component (SC) is free of any external support material and comprises (a) a compound of a transition metal selected from one of the groups 4 to 6, in particular of group 4 of the periodic table (IUPAC), preferably Ti, (b) a compound of a metal selected from one of the groups 1 to 3 of the periodic table (IUPAC), preferably of group 2 of the periodic table (IUPAC), in particular Mg, (c) a non-phthalic internal electron donor (ID).

The solid catalyst component can optionally contain an aluminium compound (d). The solid catalyst component does not contain any phthalic compounds.

In addition to the solid catalyst component (SC) the polymerization catalyst comprises cocatalyst(s), like an organo aluminium compound and external electron donor(s), like an organo silane compounds as is well known in the art and will be described in more detail later. These components are not part of the solid catalyst component as defined above, but are fed separately to the polymerization process.

A remarkable feature of the used catalyst component (SC) is that it is of solid form. In other words for the propylene polymer composition (P) polymerization an heterogeneous catalysis is applied, i.e. the aggregate state (solid state) of the catalyst component (SC) differs from the aggregate state of the reactants, i.e. the propylene, ethylene and other a-olefins used.

Different to traditional known solid catalysts, the catalyst component (SC) used in the present invention is a so-called self-supported catalyst system, or in other words in the solid catalyst component (SC) active catalyst components are not supported on any external support or carrier material. Thus, the solid catalyst component used in the present invention does not comprise in any significant amounts of catalytically inert material which is normally used as support material. Inert support material is understood to be in this application any material which is used to decrease solubility of the catalyst systems in polymerizations media as well in common solvents like pentane, heptane and toluene.

Typical inert support materials used in typical prior art supported catalysts are organic and inorganic support materials, like silica or porous polymeric material. These support materials are generally used in amounts of at least 50 wt.-%, more preferably of at least 70 wt.-% in prior art catalysts. However, the solid catalyst component (SC) used in the present invention, is prepared without using any external support material and thus the amount of such an inert support material within the solid catalyst component (SC) is of not more than 10.0 wt.-%, yet more preferably below 5.0 wt.-%, yet more preferably not detectable.

Typically the solid catalyst component (SC) is in a form of solid particles having a surface area, measured according to the commonly known BET method with N2 gas as analysis adsorptive (ASTM D 3663), less than 20 m$^2$/g. In some embodiments the surface area is preferably less than 15 m$^2$/g, more preferably is less than 10 m$^2$/g. In some other embodiments, the solid catalyst particles show a surface area 5 m$^2$/g or less, which is the lowest detection limit with the methods used in the present invention.

The solid catalyst particles can be additionally or alternatively defined by the pore volume measured according to ASTM 4641. Thus it is appreciated that the solid catalyst particles are of a pore volume of less than 1.0 ml/g. In some embodiments the pore volume is more preferably of less than 0.5 ml/g, still more preferably of less than 0.3 ml/g and even less than 0.2 ml/g. In another preferred embodiment the pore volume is not detectable when determined according to ASTM 4641.

Moreover the solid catalyst particles are typically of a mean particle size of not more than 500 μm, i.e. preferably in the range of 2 to 500 μm, more preferably 5 to 200 μm. It is in particular preferred that the mean particle size is below 150 μm, still more preferably below 100 μm. A preferred range for the mean particle size is 10 to 80 μm. In some embodiments mean particle size is preferably in the range of 10 to 60 μm.

As indicated above the solid catalyst component (SC) used in the present invention is most preferably in the form of spherical, compact particles having smooth surface. Further, particle size distribution is in a preferred embodiment narrow.

A further essential feature of the catalyst used in the present invention is that the catalyst is prepared without any phthalic compounds typically used as internal electron donor or donor precursor. In the present invention expressions "internal electron donor" and "internal donor" have the same meaning and can be used interchangeable.

Thus, the solid catalyst component used in the present invention is a solid Ziegler-Natta catalyst component, which comprises a compound of a transition metal of Group 4 to 6, most preferably a titanium compound, a Group 1 to 3 metal compound, most preferably a magnesium compound and an internal electron donor (ID) being a non-phthalic compound. Thus, the catalyst is prepared without any undesired phthalic compounds, and thus the catalyst is featured to be a "non-phthalic catalyst component". Further, the solid catalyst is free of any external support material, like silica or MgCb, but the catalyst is self- supported.

The solid catalyst component in particulate form is obtainable by the following general procedure:

a) providing a solution of

- a1) at least a Group 2 metal alkoxy compound (Ax) being the reaction product of a Group 2 metal compound and an alcohol (A) comprising in addition to the hydroxyl moiety at least one ether moiety optionally in an organic liquid reaction medium; or

- a.2) at least a Group 2 metal alkoxy compound ($A_X'$) being the reaction product of a Group 2 metal compound and an alcohol mixture of the alcohol (A) and a monohydric alcohol (B) of formula ROH, where R is an alkyl of 2 to 16 C-atoms, optionally in an organic liquid reaction medium; or

- a3) a mixture of the Group 2 metal alkoxy compound (Ax) and a Group 2 metal alkoxy compound (Bx) being the reaction product of a Group 2 metal compound and the monohydric alcohol (B), optionally in an organic liquid reaction medium; or

- a.4) Group 2 metal alkoxy compound of formula M(ORi)n(OR2)mX2-n-m or mixture of Group 2 alkoxides M(ORi)n'X2-n' and M(OR2)m'X2-m', where M is Group 2 metal, X is halogen, Ri and R2 are different alkyl groups of C2 to Cie carbon atoms, and 0 < n < 2, 0 < m < 2 and n+m ≤ 2, provided that both n and m are not simultaneously zero, 0 < n' < 2 and 0 < m' < 2; and

b) adding said solution from step a) to at least one compound of a transition metal of Group 4 to 6 and

c) obtaining the solid catalyst component particles,

and adding a non-phthalic internal electron donor (ID) at any step prior to step c).

The internal donor (ID) or precursor thereof can thus added to the solution of step a) or to the transition metal compound before adding the solution of step a) into said transition metal compound, or after the addition of the solution of step a) into the transition metal compound. According to the procedure above the solid catalyst can be obtained via precipitation method or via emulsion - solidification method depending on the physical conditions, especially temperature used in steps b) and c). Emulsion is also called liquid/liquid two-phase system.

In both methods (precipitation or emulsion-solidification) the catalyst chemistry is the same.

In the precipitation method combination of the solution of step a) with at least one transition metal compound in step b) is carried out and the whole reaction mixture is kept at least at 50 °C, more preferably in the temperature range of 55 to 110 °C, more preferably in the range of 70 to 100 °C, to secure full precipitation of the catalyst component in the form of a solid particles (step c).

In the emulsion - solidification method in step b) the solution of step a) is typically added to the at least one transition metal compound at a lower temperature, such as in the range of -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention. Preferably the Group 2 metal is magnesium.

The Group 2 metal, preferably magnesium alkoxy compounds (Ax), ($A_X'$) and (Bx) can be prepared in situ in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds (3/4)) and used as such in the catalyst preparation process of the invention. In a preferred embodiment in step a) the solution of ai) or as) are used, i.e. a solution of ($A_X'$) or a solution of a mixture of (Ax) and (Bx).

Illustrative examples of alcohols (A) are glycol monoethers. Preferred alcohols (A) are C2 to C4 glycol monoethers, wherein the ether moieties comprise from 2 to 18 carbon atoms, preferably from 4 to 12 carbon atoms. Preferred examples are 2-(2-ethylhexyloxy)ethanol, 2- butyloxy ethanol, 2-hexyloxy ethanol, 1,3-propylene-glycol-monobutyl ether and 3-butoxy- 2-propanol, with 2-(2-ethylhexyloxy)ethanol , 1,3-propylene-glycol-monobutyl ether and 3- butoxy-2-propanol being particularly preferred. Illustrative monohydric alcohols (B) are of formula ROH, with R being straight-chain or branched C2-C16 alkyl residue, preferably C4 to C10, more preferably Ceto Cs alkyl residue The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, still more preferably 5:1 to 1 : 3, most preferably 5: 1 to 3 : 1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used. Alkyl groups can be similar or different C1-C20 alkyls, preferably C2-C10 alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R' ' (OH)m to obtain said magnesium alkoxide compounds. Preferred polyhydric alcohols, if used, are alcohols, wherein R" is a straight-chain, cyclic or branched C2 to C10 hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Heptane and pentane are particular preferred. The reaction for the preparation of the magnesium alkoxy compound may be carried out at a temperature of 0°C to 80°C, suitable at a temperature of 20 °C to 70 °C. Most suitable temperature is selected depending on the Mg compound and alcohol(s) used.

The transition metal compound of Group 4 to 6 is preferably a titanium compound, most preferably a titanium halide, like $TiCl_4$. The internal donor (ID) used in the preparation of the catalyst used in the present invention is preferably selected from (di)esters of non-phthalic carboxylic (di)acids, 1,3-diethers, and derivatives thereof. Especially preferred internal donors are (di)esters of (di)carboxylic acids, in particular esters belonging to a group comprising malonates, maleates, substituted maleates, like citraconates, succinates, glutarates, cyclohexene-l,2-dicarboxylates and benzoates, and any derivatives thereof. Preferred examples are substituted maleates, like 2-methyl maleates.

Most preferably the internal donor (ID) is di-2-ethylhexyl citraconate.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched C12 to C20 (meth)acrylates such as poly(hexadecyl)-methacrylate and poly(octadecyl)-methacrylate and mixtures thereof. Turbulence minimizing agent (TMA), if used, is preferably selected from a-olefin polymers of a-olefin monomers with 6 to 20 carbon atoms, like polyoctene, polynonene, polydecene, polyundecene or polydodecene or mixtures thereof. Most preferable it is polydecene. The solid particulate product obtained by the precipitation or by the emulsion - solidification method may be washed at least once, preferably at least twice, most preferably at least three times with aromatic and/or aliphatic hydrocarbons, preferably with toluene, heptane or pentane and/or with TiCl4. Washing solutions can also contain donors and/or compounds of Group 13, like trialkyl aluminium, halogenated alkyl aluminium compounds or alkoxy aluminiun compounds. Aluminium compounds can also be added during the catalyst synthesis.

The catalyst can further be dried, as by evaporation or flushing with nitrogen, or it can be slurried to an oily liquid without any drying step.

The finally obtained solid catalyst component is desirably in the form of particles having generally an average particle size range of 5 to 200 μm, preferably 10 to 100 μm. Particles are compact with low porosity and have surface area below 20 $g/m^2$, more preferably below 10 $g/m^2$, or even below 5 $g/m^2$, i.e. below the detection limit. Typically the amount of Ti is 1 - 6 wt-%, Mg 10 to 20 wt-% and internal donor 10 to 40 wt-% in the solid catalyst component.

Detailed description of the preparation of catalysts used in the present invention are disclosed in WO 2012/007430, EP2610271, EP 261027 and EP2610272 which are incorporated here by reference.

As a further catalyst component in the instant polymerization process an external electron donor (ED) being an organosilane is present. In the present invention expressions "external electron donor" and "external donor" have the same meaning and can be used interchangeable.

Preferably the external donor used in the present invention is an organosilane. More preferably the external donor used in the present invention is selected from cyclohexylmethyl dimethoxy silane (C-Donor) or dicyclopentyl dimethoxy silane (D-Donor), the latter being especially preferred. In addition to the solid catalyst component and the optional external donor (ED) a co-catalyst is used.

The co-catalyst is a compound of group 13 metal of the periodic table (IUPAC), such as an organoaluminum compound, like aluminum alkyl, or aluminum alkyl halide compound. Accordingly in one specific embodiment the co-catalyst (Co) is preferably a trialkylaluminium, like (C1 - C6) trialkyl aluminium, especially triethylaluminium (TEAL), dialkyl aluminium halide, like (C1- C6) dialkyl aluminium chloride, especially diethyl aluminium chloride or alkyl aluminium dihalide, like (C1 - C6) alkyl aluminium dichloride, especially ethyl aluminium dichloride or mixtures thereof. In one specific embodiment the co-catalyst (Co) is triethyl aluminium (TEAL).

The molar ratio between the co-catalyst (Co) and the external donor (ED) [Co/ED] and/or the ratio between the co-catalyst (Co) and the transition metal (TM) [Co/TM] should be carefully chosen for the inventive process.

According to the present invention the Al/external donor ratio [Al/ED] is in the range of 5.0 to 8.0 (mol/mol), more preferably 6.0 to 7.5 (mol/mol) and most preferably 6.3 to 7.2 (mol/mol).

In a further aspect, the Aluminum / Titanium ratio is 190 to 240 (mol/mol), more preferably 220 to 240 (mol/mol), and most preferably 225 to 240 (mol/mol).

Suitable ethylene / C3-C12 alpha olefin plastomers (Component (B)) are commercially available. For example Vistamaxx grades, Engage grades and/or Queo grades can be used. Particularly preferred are Vistamaxx 6202, Queo 8210 and Queo 0210.

In yet a further aspect the present invention is concerned with an article comprising the inventive heterophasic polyolefin composition. The articles are preferable thin-walled. The articles preferably are thin-walled articles having a wall thickness of 300 micrometer to 2mm. More preferably the thin-walled articles have a wall thickness of 300 micrometer to 1400 micrometer, and even more preferably the thin-walled articles have a wall thickness of 300 micrometer to 900 micrometer.

In addition to that the present invention is also concerned with the use of the heterophasic polyolefin composition according to the present invention for injection molding and articles used for packing applications particularly articles used for thin wall packaging.

## Examples

Measurement methods

**MFR2 (230 °C)** is measured according to ISO 1133 (230 °C, 2.16 kg load).

## Phthalic acid esters and decomposition products

Detection is carried out by gas chromatography coupled with one- or two-dimensional mass spectrometry (GC-MS respectively GC-MS/MS) optionally preceded by enrichment on a suitable adsorption material.

"Free of phthalic acid esters as well as decomposition products thereof" indicates a maximum of 10 μg/kg, i.e. 10 ppb by weight.

Typical equipment to be used is for example given in H. Fromme, T. Küchler, T. Otto, K. Pilz, J. Muller, A. Wenzel Water Research 36 (2002) 1429 - 1438 which is incorporated by reference herewith.

## Comonomer content by IR spectroscopy

Ethylene content in propylene polymer is measured by Fourier-transform infrared (FTIR) spectroscopy. A thin film of the sample (thickness approximately 0,3 mm) prepared by hot-pressing. The area of -CH2- absorption peak 720 + 730 cm-1 is measured using baseline 762 - 694 cm-1. The area of reference peak at 4323 cm-1 is measured using baseline 4650 - 4007 cm-1. The method is calibrated by ethylene content data measured by 13C NMR.

The calibration procedure should be undertaken within the vendor software using a quadratic function:

$$W_E = C_2 \text{ x } A_0{}^2 + C_1 \text{ x } A_0 + C_0$$

where

$W_E$     is the ethylene content of the copolymer in units of weight percent;
$A_0$     is the area of the quantitative band normalised to that of the reference band;
$C_2$     is the quadratic calibration coefficient (curvature);
$C_1$     is the linear calibration coefficient (slope);
$C_0$     is the offset calibration coefficient (offset).

**Content of 1-butene comonomer**

The 1-butene content in propylene polymer is measured by using FTIR according to the following procedure. A thin film of the sample (thickness approximately 0,45 mm) is prepared by hot-pressing. The butene content is determined measuring the area of peak 767 cm-1 and using the baseline between 780 and 750 cm-1. The height of reference peak at 4323 cm-1 is measured between 4323 and 4700 cm-1. The method is calibrated by butene content data measured by 13C NMR.

The 1-butene content is calculated as following equation

$$Butene\ (w-\%) = B * \frac{Area\ (butene\ peak\ 767\ cm-1)}{abs4323(cm-1) - abs4700(cm-1)} + C$$

B is the linear calibration coefficient (slope)

C is the offset calibration coefficient (offset)

**Melting and crystallisation temperature**

The melting and crystallisation temperature $T_m$ and $T_c$ are determined according to ISO 11357-1, -2 and -3 with a *TA-Instruments 2920 Dual-Cell* with RSC refrigeration apparatus and data station. A heating and cooling rate of 10 °C/min is applied in a heat / cool / heat cycle between +23 and +210 °C, the crystallisation temperature $T_C$ being determined in the cooling step and the $T_m$ melting temperature being determined in the second heating step.

**Xylene Cold Soluble fraction at room temperature (XCS, wt.-%)** is determined at 25 °C according to ISO 16152; 5th edition; 2005-07-01.

**Notched impact strength**

The Charpy notched impact strength (NIS) was measured according to ISO 179 1eA at +23 °C, using injection molded bar test specimens of 80x10x4 mm$^3$ prepared in accordance with EN ISO 1873-2.

**Haze**

Haze is determined according to ASTM D1003-00 on 60x60x1 mm$^3$ plaques injection molded in line with EN ISO 1873-2

**Tensile modulus**

The tensile strength, including tensile stress at yield, strain at yield and elongation at break, is measured according to ISO 527-1 (cross head speed 50 mm/min). The tensile modulus is measured according to ISO 527-1 (cross head speed 1 mm/min) using injection molded specimens according to ISO 527-2(1B), produced according to EN ISO 1873-2 (dog bone shape, 4 mm thickness).

**Catalyst properties (Surface area, Pore volume, mean particle size)**

Surface area is determed as BET with N2 gas ASTM D 3663, apparatus Micromeritics Tristar 3000: sample preparation at a temperature of 50 °C, 6 hours in vacuum.

Pore volume is measured according to ASTM 4641.

Mean particle size is given in $\mu$m and measured with Coulter Counter LS200 at room temperature with n-heptane as medium Examples.

**Material description:**

**Catalyst**

3.4 litre of 2-ethylhexanol and 810 ml of propylene glycol butyl monoether (in a molar ratio 4/1) were added to a 20 l reactor. Then 7.8 litre of a 20 % solution in toluene of BEM (butyl ethyl magnesium) provided by Crompton GmbH, were slowly added to the well stirred alcohol mixture. During the addition the temperature was kept at 10 °C. After addition the temperature of the reaction mixture was raised to 60 °C and mixing was continued at this temperature for 30minutes. Finally after cooling to room temperature the obtained Mg-alkoxide was transferred to a storage vessel.

21.2 g of Mg alkoxide prepared above was mixed with 4.0 ml bis(2-ethylhexyl) citraconate for 5 min. After mixing the obtained Mg complex was used immediately in the preparation of the catalyst component.

19.5 ml of titanium tetrachloride was placed in a 300 ml reactor equipped with a mechanical stirrer at 25 °C. Mixing speed was adjusted to 170 rpm. 26.0 g of Mg-complex prepared above was added within 30 minutes keeping the temperature at 25 °C. 3.0 ml of Viscoplex® 1-254 and 1.0 ml of a toluene solution with 2 mg Necadd 447™ was added. Then 24.0 ml of heptane was added to form an emulsion.

Mixing was continued for 30 minutes at 25 °C, after which the reactor temperature was raised to 90 °C within 30 minutes. The reaction mixture was stirred for a further 30 minutes at 90 °C.

Afterwards stirring was stopped and the reaction mixture was allowed to settle for 15 minutes at 90 °C. The solid material was washed 5 times:

Washings were made at 80 °C under stirring for 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of TiCl4 and 1 ml of donor.

Wash 3: Washing was made with 100 ml of toluene.

Wash 4: Washing was made with 60 ml of heptane.

Wash 5: Washing was made with 60 ml of heptane under 10 minutes stirring.

Afterwards stirring was stopped and the reaction mixture was allowed to settle for 10 minutes while decreasing the temperature to 70 °C with subsequent siphoning, followed by N2 sparging for 20 minutes to yield an air sensitive powder.

Ti content was 3.76 wt-%

External Donor:

In the Examples, the external donor D (Dicyclopentyl dimethoxy silane CAS 126990-35-0) was used.

The co-catalyst component used was triethyl aluminium (TEAL).

**Plastomers**

The commercially available grades Vistamaxx 6202, Queo8210 and Queo0210 were used as plastomers.

**Polymerization**

The polymerization conditions are listed in the Table below.

All examples were stabilized with

0.1 wt.-% of Irganox B225 (1:1-blend of Irganox 1010 and Irgafos 168) of BASF AG, Germany),

0.05 wt.-% calcium stearate and

2000 ppm Millad 3988 (1,3 : 2,4 Bis(3,4-dimethylbenzylidene) sorbitol).

and coextruded with Vistamaxx 6202, Queo 8210 or Queo 0210 in the amounts given in the Table. Details of the plastomers are given in Table 3.

Extrusion was done using a PRISM TSE16 co-rotating twin screw extruder having a screw diameter of 16 mm with an L/D ratio of the screw of 25. A temperature range of 200-240°C was applied, followed by strand solidification in a water bath and strand pelletization.

Table 1: Polymerization conditions for the preparation of component A

| Catalyst | type | As described above |
|---|---|---|
| External donor | type | D |
| Al/donor | mol/mol | 6.7 |
| Al/Ti ratio | mol/mol | 233 |
| **Prepoly** | | |
| Temperature | °C | 30 |

(continued)

| **Prepoly** | | |
|---|---|---|
| Residence time | h | 0.33 |
| **R1 (Loop1)** | | |
| Temperature | °C | 70 |
| Pressure | kPa | 5500 |
| Residence time | h | 0.39 |
| Split | wt% | 62 |
| H2/C3 ratio | mol/kmol | 3.54 |
| C2/C3 ratio | mol/kmol | 0 |
| C4/C3 ratio | mol/kmol | 129 |
| C2 | wt% | 0 |
| C4 | wt% | 5.4 |
| MFR 230°C/2.16kg | g/10min | 17.4 |
| XCS | wt% | 3.2 |
| **R2 (GPR1)** | | |
| Temperature | °C | 80 |
| Pressure | kPa | 2700 |
| Residence time | h | 1.65 |
| Split | wt% | 38 |
| H2/C3 ratio | mol/kmol | 40.3 |
| C2/C3 ratio | mol/kmol | 0 |
| C4/C3 ratio | mol/kmol | 113 |
| C2 made | wt% | 0 |
| C4 made | wt% | 7.4 |
| MFR made | g/10min | 23 |
| XCS | wt% | 3.1 |
| **Propylene butylene copolymer (component A)** | | |
| MFR 230°C/2.16kg | g/10min | 20 |
| C4 | wt% | 7.4 |
| C2 | wt% | 0 |
| Tm(DSC) | °C | 154 |
| Tc(DSC) | °C | 121 |
| Tm-Tc | °C | 33 |
| XCS | wt% | 3.1 |
| C6(FDA) | wt% | 1.5 |
| Tensile mod. | MPa | 1556 |
| NIS 23°C | kJ/m$^2$ | 5.2 |
| Haze (1 mm) | % | 22 |

Table 2

| | | IE1 | IE2 | IE3 | IE4 | IE5 | CE1 |
|---|---|---|---|---|---|---|---|
| **Heterophasic polyolefin composition**\*\* | | | | | | | |
| Propylene butylene copolymer (cf. Table 1) | wt% | 95 | 90 | 90 | 95 | 90 | 100 |
| Vistamaxx 6202 | wt% | - | - | - | 5 | 10 | - |
| Queo 8210 | wt% | 5 | 10 | - | - | - | - |
| Queo 0210 | wt% | - | - | 10 | - | - | - |
| **Properties** | | | | | | | |
| MFR 230°C/2.16kg | g/10min | 38 | 28 | 33 | 43 | 30 | 20 |
| Tm(DSC) | °C | 153 | 154 | 155 | 153 | 155 | 154 |

(continued)

**Properties**

| | | | | | | | |
|---|---|---|---|---|---|---|---|
| Tc(DSC) | °C | 120 | 122 | 122 | 120 | 122 | 121 |
| Tensile mod. | MPa | 1399 | 1293 | 1334 | 1306 | 960 | 1556 |
| NIS 23°C | kJ/m$^2$ | 5.2 | 7.4 | 4.92 | 4.8 | 10.5 | 5.2 |
| Haze (1 mm) | % | 35 | 35 | 25 | 31 | 25 | 22 |

\** all nucleated with 0.2 wt% of DMDBS (Millad 3988)

**Table 3: Plastomers**

| | MFR 190°C/2.16kg g/10min | Density kg/m$^3$ | C2 wt% | C3 wt% | C8 wt% |
|---|---|---|---|---|---|
| Vistamaxx 6202 | 9.1 | 863 | 15 | 85 | 0 |
| Queo 8210 | 10 | 882 | 75 | 0 | 25 |
| Queo 0210 | 1.1 | 882 | 75 | 0 | 25 |

## Claims

1. A heterophasic polyolefin composition having an MFR of 7 to 100 g/10min and having a Tm(1) of 150 °C or higher comprising a propylene butylene copolymer matrix phase and
   a rubber phase selected from ethylene / C3-C12 alpha olefin plastomers the composition being obtainable by blending

   A) 60.0 to 99.0 wt.-% of a propylene butylene copolymer which comprises monomer units derived from

   a) propylene in an amount of 88-98 wt.-%
   b) butylenes in an amount of 2-12 wt.-%

   with respect to the total weight of the propylene butylene copolymer
   B) 1.0 - 40.0 wt.-% of ethylene / C3-C12 alpha olefin plastomers having a density of less than 904 kg/m$^3$ and

   optionally a nucleating agent in an amount of less than 0.25 wt.-% with respect to the total of the heterophasic composition.

2. Heterophasic polyolefin composition of claim 1,
   wherein the ethylene / C3-C12 alpha olefin plastomer is a C3C2 rubber having an ethylene content of 17 wt.-% or lower and a density of 0.88 g/cm$^3$ or less, further optionally an elongation at break of 2000% or more.

3. Heterophasic polyolefin composition according to claim 2 having a tensile modulus of 900 MPa or more.

4. Heterophasic polyolefin composition according to claims 2 or 3 having a NIS (23°) of at least 4.5 kJ/m$^2$.

5. Heterophasic polyolefin composition according to claims 2, 3 or 4 having a haze of below 35% (1mm plaque).

6. Heterophasic polyolefin composition of claim 1,
   wherein the ethylene / C3-C12 alpha olefin plastomer is a C2C8 plastomer and the C2C8 plastomer has a density of below 0.904 g/cm$^3$, preferably of below 890 g/cm$^3$, optionally an elongation at break of above 930 % (ISO 527-2(5A), molded plaques), preferably of above 990%.

7. Heterophasic polyolefin composition according to claim 6 having a tensile modulus of 1200 MPa or more.

8. Heterophasic polyolefin composition according to claims 6 or 7 having a NIS (23°) of at least 4.5 kJ/m$^2$.

9. Heterophasic polyolefin composition according to claim 6, 7 or 8 having a haze of below 40% (1mm plaque).

10. Heterophasic polyolefin composition according to any of the preceding claims comprising at least one nucleating agent.

11. Heterophasic polyolefin composition according to any of the preceding claims, the composition further comprising a propylene homopolymer C) which is co-blended in an amount of less than 2 wt.-% based on the total weight of the composition.

12. Heterophasic polyolefin composition according to any of the preceding claims not containing a compatibilizer selected from the group of ethylene polymers having an ethylene content of at least 80 mol% and a density of 905 to 925 $kg/m^3$, LDPE and/or Styrene Ethylene Butylene Styrene Block Copolymer(s).

13. Process for the preparation of a heterophasic polyolefin composition according to any of claims 1 to 12 comprising the steps of

- polymerizing a propylene butylene copolymer including monomer units derived from

a) propylene in an amount of 88-98 wt.-%
b) butylene in an amount of 2-12 wt.-%

with respect to the total weight of the propylene butylene copolymer;
in at least two reactors coupled in series
using a Ziegler Natta catalyst system having citraconate as internal donor, and an organo aluminium compound as cocatalyst and an organosilane, preferably dicyclopentyldimethoxysilane (donor D) as external donor at a Al/external donor ratio of 5.0 - 8.0 mol/mol and a Al/Ti ratio of 190 to 240 mol/mol, whereby in a first reactor a pre-polymerization is carried out at 25-35°C for 10 to 60 minutes yielding a pre-polymer,
further polymerizing the pre-polymer at a temperature of 65 - 75°C, at a C4/C3 ratio of 115 to 145 mol/kmol yielding a first intermediate having an C4 content of 4 to 7 wt.-%,
transferring the first intermediate to a second reactor and further polymerizing at 75 to 85°C at a C4/C3 ratio of 90 to 150 mol/kmol,
to yield the second reactor product,
- extruding 60.0 to 99.0 wt.-% of the second reactor product together with 1.0 -40.0 wt.-% of ethylene / C3-C12 alpha olefin plastomers having a density of less than 904 $kg/m^3$,
in the presence of a nucleating agent in an amount of less than 0.25 wt.-% with respect to the total heterophasic polyolefin composition
to yield the final heterophasic polyolefin composition.

14. Article comprising the composition according to any of claims 1 to 12.

15. Use of composition according to any of claims 1 to 12 for injection molding and packing applications particularly thin wall packaging.

**Patentansprüche**

1. Heterophasige Polyolefin-Zusammensetzung, die eine MFR von 7 bis 100g / 10min und eine Tm(1) von 150 °C oder höher aufweist,
umfassend eine Propylen-Butylen-Copolymer-Matrixphase und
eine Kautschukphase, ausgewählt aus Ethylen/C3-C12-alpha-Olefin-Plastomeren, wobei die Zusammensetzung erhältlich ist durch Mischen von

A) 60,0 bis 99,0 Gew.-% eines Propylen-Butylen-Copolymers, das Monomereinheiten umfasst, die abgeleitet sind von

a) Propylen in einer Menge von 88-98 Gew.-%
b) Butylenen in einer Menge von 2-12 Gew.-%,

bezogen auf das Gesamtgewicht des Propylen-Butylen-Copolymers,
B) 1,0 - 40,0 Gew.-% Ethylen/C3-C12-alpha-Olefin-Plastomere mit einer Dichte von weniger als 904 $kg/m^3$ und

wahlweise ein Nukleierungsmittel in einer Menge von weniger als 0,25 Gew.-%, bezogen auf das Gesamtgewicht der heterophasigen Zusammensetzung.

2.  Heterophasige Polyolefin-Zusammensetzung nach Anspruch 1, wobei das Ethylen/C3-C12-alpha-Olefin-Plastomer ein C3C2-Kautschuk ist, der einen Ethylengehalt von 17 Gew.-% oder weniger und eine Dichte von 0,88 g/cm$^3$ oder weniger aufweist und des Weiteren optional eine Bruchdehnung von 2000 % oder mehr.

3.  Heterophasige Polyolefin-Zusammensetzung nach Anspruch 2, die einen Zugmodul von 900 MPa oder mehr aufweist.

4.  Heterophasige Polyolefin-Zusammensetzung nach Anspruch 2 oder 3, die einen NIS (23°) von zumindest 4,5 kJ/m$^2$ aufweist.

5.  Heterophasige Polyolefin-Zusammensetzung nach Anspruch 2, 3 oder 4, die eine Trübung von weniger als 35 % (1mm Prüfkörper) aufweist.

6.  Heterophasige Polyolefin-Zusammensetzung nach Anspruch 1, wobei das Ethylen/C3-C12-alpha-Olefin-Plastomer ein C2C8-Plastomer ist und das C2C8-Plastomer eine Dichte von unter 0,904 g/cm$^3$, vorzugsweise von unter 890 g/cm$^3$, und wahlweise eine Bruchdehnung von über 930 % (ISO 527-2(5A), geformte Prüfkörper), vorzugsweise von über 990 %, aufweist.

7.  Heterophasige Polyolefin-Zusammensetzung nach Anspruch 6, die einen Zugmodul von 1200 MPa oder mehr aufweist.

8.  Heterophasige Polyolefin-Zusammensetzung nach Anspruch 6 oder 7, die einen NIS (23°) von zumindest 4,5 kJ/m$^2$ aufweist.

9.  Heterophasige Polyolefin-Zusammensetzung nach Anspruch 6, 7 oder 8, die eine Trübung von unter 40 % (1mm Prüfkörper) aufweist.

10. Heterophasige Polyolefin-Zusammensetzung nach einem der vorangegangenen Ansprüche, die zumindest ein Nukleierungsmittel umfasst.

11. Heterophasige Polyolefin-Zusammensetzung nach einem der vorangegangenen Ansprüche, wobei die Zusammensetzung des Weiteren ein Propylen-Homopolymer C) umfasst, das in einer Menge von weniger als 2 Gew.-%, bezogen auf das Gesamtgewicht der Zusammensetzung, zugemischt wird.

12. Heterophasige Polyolefin-Zusammensetzung nach einem der vorangegangenen Ansprüche, die keinen Verträglichkeitsvermittler aufweist, ausgewählt aus der Gruppe von Ethylenpolymeren mit einem Ethylengehalt von zumindest 80 mol% und einer Dichte von 905 bis 925 kg/m$^3$, LDPE und/oder Styrol-Ethylen-Butylen-Styrol-Blockcopolymer(en).

13. Verfahren zur Herstellung einer heterophasigen Polyolefin-Zusammensetzung nach einem der Ansprüche 1 bis 12, umfassend die Schritte:

    - Polymerisieren eines Propylen-Butylen-Copolymers, das Monomereinheiten beinhaltet, die abgeleitet sind von

        a) Propylen in einer Menge von 88-98 Gew.-%
        b) Butylen in einer Menge von 2-12 Gew.-%,

    bezogen auf das Gesamtgewicht des Propylen-Butylen-Copolymers;
    in zumindest zwei in Reihe gekoppelten Reaktoren
    unter Verwendung eines Ziegler-Natta-Katalysatorsystems, das Citraconat als internen Donor und eine Organoaluminiumverbindung als Cokatalysator und ein Organosilan, vorzugsweise Dicyclopentyldimethoxysilan (Donor D), als externen Donor bei einem Al/externen Donor-Verhältnis von 5,0 - 8,0 mol/mol und ein Al/Ti-Verhältnis von 190 bis 240 mol/mol aufweist,
    wobei in einem ersten Reaktor eine Vorpolymerisation bei 25 - 35 °C für 10 bis 60 Minuten durchgeführt wird, was ein Vorpolymer ergibt,
des Weiteren das Vorpolymer bei einer Temperatur von 65 - 75 °C bei einem C4/C3-Verhältnis von 115 bis 145 mol/kmol polymerisiert wird, was ein erstes Zwischenprodukt ergibt, das einen C4-Gehalt von 4 bis 7 Gew. % aufweist, Überführen des ersten Zwischenprodukts in einen zweiten Reaktor und weiteres Polymerisieren bei 75 bis 85 °C bei einem C4/C3-Verhältnis von 90 bis 150 mol/kmol, um das zweite Reaktorprodukt zu erhalten, - Extrudieren von 60,0 bis 99,0 Gew.-% des zweiten Reaktorprodukts zusammen mit 1,0 bis 40,0 Gew. % Ethylen/C3-C12-alpha-Olefin-Plastomeren, die eine Dichte von weniger als 904 kg/m$^3$ aufweisen, in Gegenwart eines Nukleierungsmittels in einer Menge von weniger als 0,25 Gew.-%, bezogen auf die gesamte heterophasige Polyolefin-Zusammensetzung, um die endgültige heterophasige Polyolefin-Zusammensetzung zu erhalten.

**14.** Produkt, umfassend die Zusammensetzung nach einem der Ansprüche 1 bis 12.

**15.** Verwendung der Zusammensetzung nach einem der Ansprüche 1 bis 12 für Spritzgieß- und Verpackungsanwendungen, insbesondere für dünnwandige Verpackungen.


**Revendications**

**1.** Composition polyoléfinique hétérophasique ayant un MFR de 7 à 100 g/10 min et ayant une Tm(1) de 150 °C ou plus comprenant une phase matricielle de copolymère de propylène-butylène et une phase de caoutchouc choisie parmi les plastomères d'éthylène/alpha-oléfine en C3-C12, la composition pouvant être obtenue en mélangeant

A) 60,0 à 99,0 % en poids d'un copolymère de propylène-butylène qui comprend des motifs monomères dérivés de

a) propylène en une quantité de 88 à 98 % en poids
b) butylènes en une quantité de 2 à 12 % en poids par rapport aux poids total du copolymère de propylène-butylène

B) 1,0 - 40,0 % en poids de plastomères d'éthylène / alpha-oléfines en C3-C12 ayant une densité inférieure à 904 kg/m$^3$ et

éventuellement un agent de nucléation en une quantité inférieure à 0,25 % en poids par rapport au total de la composition hétérophasique.

**2.** Composition polyoléfinique hétérophasique de la revendication 1,
dans laquelle le plastomère éthylène/alpha-oléfine en C3-C12 est un caoutchouc en C3-C2 ayant une teneur en éthylène de 17 % en poids ou moins et une densité de 0,88 g/cm$^3$ ou moins, et éventuellement un allongement à la rupture de 2000 % ou plus.

**3.** Composition polyoléfinique hétérophasique selon la revendication 2 ayant un module de traction de 900 MPa ou plus.

**4.** Composition polyoléfinique hétérophasique selon les revendications 2 ou 3 ayant un NIS (23°) d'au moins 4,5 kJ/m$^2$.

**5.** Composition polyoléfinique hétérophasique selon les revendications 2, 3 ou 4 ayant un trouble inférieur à 35 % (plaque de 1 mm).

**6.** Composition polyoléfinique hétérophasique de la revendication 1,
dans laquelle le plastomère éthylène/alpha-oléfine en C3-C12 est un plastomère en C2-C8 et le plastomère en C2-C8 a une densité inférieure à 0,904 g/cm$^3$, de préférence inférieure à 890 g/cm$^3$, éventuellement un allongement à la rupture supérieur à 930 % (ISO 527-2(5A), plaques moulées), de préférence supérieur à 990 %.

**7.** Composition polyoléfinique hétérophasique selon la revendication 6 ayant un module de traction de 1200 MPa ou plus.

**8.** Composition polyoléfinique hétérophasique selon les revendications 6 ou 7 ayant un NIS (23°) d'au moins 4,5 kJ/m$^2$.

9. Composition polyoléfinique hétérophasique selon la revendication 6, 7 ou 8 ayant un trouble inférieur à 40 % (plaque de 1 mm).

10. Composition polyoléfinique hétérophasique selon l'une des revendications précédentes comprenant au moins un agent de nucléation.

11. Composition polyoléfinique hétérophasique selon l'une des revendications précédentes, la composition comprenant en outre un homopolymère de propylène C) qui est mélangé en une quantité inférieure à 2 % en poids par rapport au poids total de la composition.

12. Composition polyoléfinique hétérophasique selon l'une des revendications précédentes ne contenant pas d'agent de compatibilité choisi dans le groupe des polymères d'éthylène ayant une teneur en éthylène d'au moins 80 % en moles et une densité de 905 à 925 kg/m$^3$, LDPE et/ou copolymère(s) séquencé(s) styrène-éthylène-butylène-styrène.

13. Procédé de préparation d'une composition polyoléfinique hétérophasique selon l'une des revendications 1 à 12, comprenant les étapes suivantes

    - polymérisation d'un copolymère de propylène-butylène comprenant des unités monomères dérivées de

        a) propylène en une quantité de 88 à 98 % en poids
        b) butylène en une quantité de 2 à 12 % en poids

    par rapport au poids total du copolymère de propylène-butylène ; dans au moins deux réacteurs couplés en série en utilisant un système de catalyseur Ziegler Natta ayant du citraconate comme donneur interne, et un composé organoaluminium comme cocatalyseur et un organosilane, de préférence le dicyclopentyldiméthoxysilane (donneur D) comme donneur externe, à un ratio Al/donneur externe de 5,0-8,0 mol/mol et un ratio Al/Ti de 190 à 240 mol/mol, dans lequel, dans un premier réacteur, une prépolymérisation est effectuée à 25-35°C pendant 10 à 60 minutes pour obtenir un prépolymère,
    en polymérisant davantage le prépolymère à une température de 65 à 75°C, à un ratio C4/C3 de 115 à 145 mol/kmol, ce qui donne un premier intermédiaire ayant une teneur en C4 de 4 à 7 % en poids,
    en transférant le premier intermédiaire dans un second réacteur et en poursuivant la polymérisation à une température de 75 à 85°C avec un ratio C4/C3 de 90 à 150 mol/kmol, pour obtenir le produit du second réacteur,
    - en extrudant de 60,0 à 99,0 % en poids du produit du second réacteur avec 1,0 à 40,0 % en poids de plastomères d'éthylène/ alpha-oléfines en C3-C12 ayant une densité inférieure à 904 kg/m$^3$,
    en présence d'un agent de nucléation en une quantité inférieure à 0,25 % en poids par rapport à la composition totale de la polyoléfinique hétérophasique pour donner la composition finale de la polyoléfinique hétérophasique.

14. Article comprenant la composition selon l'une des revendications 1 à 12.

15. Utilisation de la composition selon l'une des revendications 1 à 12 pour des applications de moulage par injection et d'emballage, en particulier pour les emballages à paroi mince.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1659151 A
- EP 2424729 A
- WO 2013144061 A1
- EP 1820821 A
- WO 9858976 A
- EP 887380 A

- WO 9858977 A
- WO 2012007430 A
- EP 2610271 A
- EP 261027 A
- EP 2610272 A

**Non-patent literature cited in the description**

- **H. FROMME ; T. KÜCHLER ; T. OTTO ; K. PILZ ; J. MULLER.** *A. Wenzel Water Research,* 2002, vol. 36, 1429-1438